# EUROPEAN PATENT APPLICATION

(11) **EP 1 691 268 A1**
(43) Date of publication of application: **16.08.2006**
(21) Application number: 04819947.5
(22) Date of filing: 03.12.2004
(51) Int. Cl.: G06F 3/12

(54) **PRINTER AND PRINTING METHOD**

(30) Priority: 05.12.2003 JP 2003407201
(71) Applicant: MATSUSHITA ELECTRIC INDUSTRIAL CO., LTD., Kadoma-shi, Osaka 571-8501 (JP)
(72) Inventor: MATSUNAGA, Shigeki, Osaka-shi, Osaka 532-0022 (JP)
(74) Representative: Balsters, Robert
(86) International application number: PCT/JP2004/018062
(87) International publication number: WO 2005/055044

(57) **Abstract**

A printing apparatus (0330) that is connected via a communication path (0340) with a print instructing apparatus (0310) which issues a print instruction to print print data and a storage apparatus (0320) which has a storage space for temporarily storing the print data, the printing apparatus includes: a spool reservation request unit (0332) operable to issue a request to the storage apparatus (0320), the request requesting to reserve a spool in the storage apparatus for temporarily storing the print data; a spool information receiving unit (0333) operable to receive a response from the storage apparatus (0320), the response responding to the request issued by the spool reservation request unit; a print instruction receiving unit (0331) operable to receive the print instruction issued by the print instructing apparatus (0310); and a printing unit (0336) operable to receive the print data sent from the spool, after the print instruction is received and the print data is stored in the spool in the storage apparatus (0320), and print the received print data.

## Description

### Technical Field

The present invention relates to a technology by which a printing apparatus receives, via a network, data stored in an instructing apparatus for instructing to print the data, and prints the data. More particularly, the present invention relates to a printing apparatus and a printing method when data to be printed is spooled in a storage area in another apparatus that is neither the printing apparatus nor the instructing apparatus.

### Background Art

Conventionally, when a plurality of clients (instructing apparatuses) share a printer (printing apparatus) via a local network (LAN), a print server (storage apparatus) having a spool has received all data from the clients and sequentially outputted them to the printer, as disclosed in a patent document, Japanese Patent Laid-Open No. 8-278860 publication, for example. Alternatively, the print server may be an apparatus, such as an expensive laser printer, having a large-capacity storage area and including a spool in the print server itself.

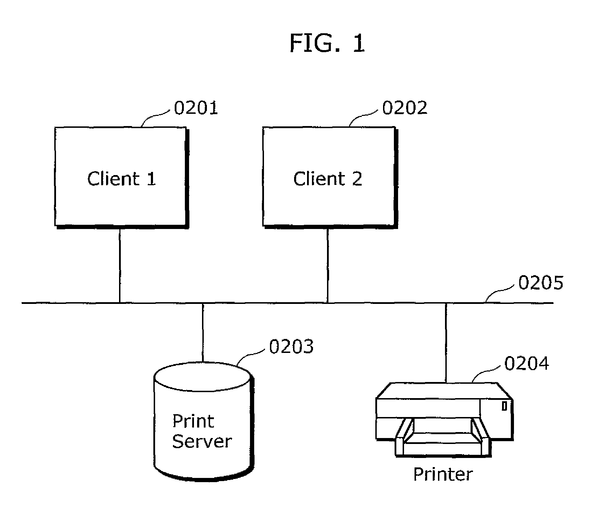

FIG. 1 is a schematic diagram illustrating a configuration of a conventional printing system using a spool for printing only.

A first client 0201 and a second client 0202 are apparatuses that instructs a printer to print data stored in a personal computer (PC), a television set, a portable telephone, a digital still camera (DSC), a DVD recording/reproducing apparatus, an HDD recording/reproducing apparatus, or the like.

A print server 0203 is an apparatus that is previously set as a spooler for the printer 0204, and receives all requests from the clients to print the data, temporarily stores the data in a spool, and outputs, to the printer, the data by order of the receipt of the print requests.

The printer 0204 is an apparatus that sequentially prints the data received from the print server.

Those apparatuses are connected via a network 0205, such as a LAN.

Referring to FIG. 1, when the first client 0201 or the second client 0202 receives print instructions from a user, the client issues a request to the print server 0203 to print the data and sends the stored data to the print server. When the print server receives the data, the print server sends the data to the printer 0204 if the printer is in an idle state. If the printer is processing other print jobs, the print server stores the data temporarily in the spool and waits until the printer becomes in an idle state to send the data to the printer by order of the receipt of the print request. The printer prints the data sent from the print server.

### Disclosure of Invention

When a printing system is implemented to receive a plurality of print requests at the same time from any number of clients, or have a large-capacity storage area for printing data in reply to a single printing request, the system, as the conventional printing system, needs to add a server for printing only, or form a spool in a printer.

However, an inexpensive printer, such as an inkjet printer, cannot have a spool since the results in increasing its cost. Moreover, in a non-PC environment, where there is not print server or PC on a network, there is, off course, no print server. Hence, this causes a problem that when a printer prints data stored in a client in the non-PC environment (an audio/video (AV) apparatus, such as a television set, a portable telephone, a digital still camera (DSC), a DVD recording/reproducing apparatus, or a HDD recording/reproducing apparatus), the client needs to keep the data to be printed until the printer becomes in an idle state and completes to receive all of the data. More specifically, there are problems that an apparatus with a small-capacity memory, such as a portable telephone, cannot reserve a storage area of a capacity enough to store data, thereby failing to print the data, or an apparatus that is disconnected from a network to be carried and used by the user, such as a DSC, needs to be connected with the network during printing.

The present invention solves the above conventional problems and is realized as a printing system in which neither a client for instructing to print nor a printer in a non-PC environment needs to have any spool.

To solve the conventional problem, a printing apparatus of the present invention that is connected via a communication path with a print instructing apparatus which issues a print instruction to print print data and an external storage apparatus which has a storage space for temporarily storing the print data, the printing apparatus includes: a spool reservation request unit operable to issue, to the external storage apparatus, a request for reservation of a spool for temporarily storing the print data; a spool reservation response receiving unit operable to receive, from the external storage apparatus, a response to the request issued by the spool reservation request unit; a print instruction receiving unit operable to receive the print instruction issued by the print instructing apparatus; a print data receiving unit operable to receive the print data sent from the spool, after the print instruction is received and the print data is stored in the spool in the external storage apparatus; and a printing unit operable to print the received print data.

Note that the external storage apparatus is a home appliance connected to a home network, such as an AV server, a television set, a DVD recording/reproducing apparatus, or a HDD recording/reproducing apparatus, which carries a large-capacity storage device, such as a HDD.

Note also that the instructing apparatus is a portable telephone, a digital camera, or a television set.

According to the above structure, the printing apparatus can print data, being provided a spool by an apparatus being the third party besides the instructing apparatus for instructing to print.

Furthermore, in the printing apparatus of the present invention, the spool reservation request unit may be operable to issue, to the external storage apparatus, the request for reservation of the spool, after the print instruction receiving unit receives the print instruction.

The printing apparatus of the present invention may further include a spool release request unit operable to issue, to the external storage apparatus, a request for release of the spool every time the printing unit has finished printing, the request requesting to release the spool.

The spool reservation request unit is operable to issue the request to the external storage apparatus when the printing apparatus is powered on.

The printing apparatus further includes a spool release request unit operable to issue, to the external storage apparatus, a request for release of the spool when the printing apparatus is powered off.

Note that the present invention is not limited to the above printing apparatus, but also can be implemented as a printing method including steps that are characteristic means used in the printing apparatus, or as a program causing a computer to execute the steps.
The program is, off course, able to be distributed via a recording medium such as a CD-ROM or a transmission medium such as the Internet.

The printing system of the present invention does not require a spool neither in the instructing apparatus for instructing to print nor the printing apparatus, thereby saving and reducing a memory therein.

### Brief Description of Drawings

FIG. 1 is a schematic diagram illustrating a conventional printing system using a spool for printing only, according to the related art.
FIG. 2 is a block diagram illustrating a configuration of a prïnting apparatus according to a first embodiment of the present invention.
FIG. 3 is a diagram showing a basic communication sequence according to the first embodiment.
FIG.4 is a flowchart showing processing performed by a printing apparatus shown in FIG. 3, according to the first embodiment.
FIG. 5 is a block diagram illustrating a configuration of a storage apparatus according to a second embodiment of the present invention.
FIG. 6 is a flowchart showing processing performed by a storage apparatus 0520 according to the second embodiment.
FIG. 7 is a schematic diagram illustrating a configuration of a printing system according to a third embodiment.
FIG. 8 is a diagram illustrating a communication sequence when a printing apparatus requests a storage apparatus to always reserve a spool, according to the third embodiment.
FIG.9 is a diagram showing one example of a communication sequence when a printer being a printing apparatus requests an AV server being a storage apparatus to always reserve a spool and all processing are performed via the printer, according to a fourth embodiment.
FIG.10 is a diagram showing one example of a communication sequence when, based on a print instruction from an AV apparatus being an instructing apparatus, the printer being the printing apparatus requests the AV server being the storage apparatus to always reserve the spool and all processing are performed via the printer, according to the fourth embodiment.

### Best Mode for Carrying Out the Invention

The following describes embodiments according to the present invention with reference to the drawings.

### (First Embodiment)

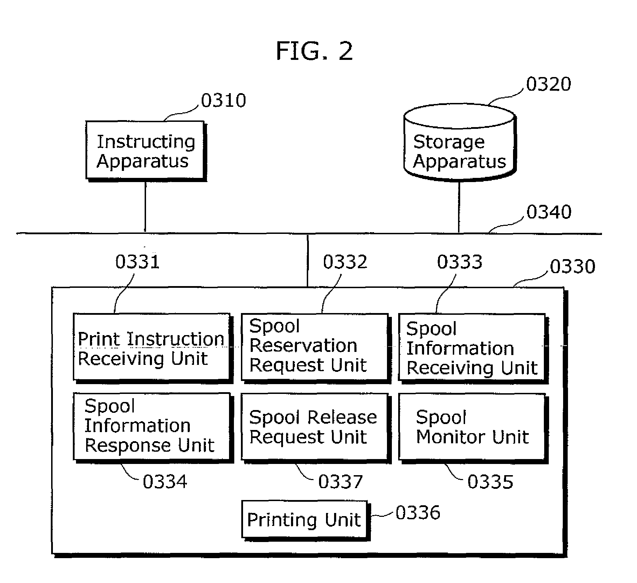

FIG. 2 is a diagram illustrating a configuration of a printing apparatus according to a first embodiment of the present invention.

A printing apparatus 0330 is connected with an instructing apparatus 0310 and a storage apparatus 0320, via a network 0340 such as an Ethernet network (R), a wireless Local Area Network (LAN) (802.11b, for example), an IEEE1394 interface, a Bluetooth connection (R), or an Universal Serial Bus (USB). Note that "print instructing apparatus" in appended claims is "instructing apparatus" and "AV apparatus" in the present embodiments, "external storage apparatus" in the claims is "storage apparatus" and "AV server" in the present embodiments, and "printing apparatus" in the claims is "printer" and "printing apparatus" in the present embodiments.

The instructing apparatus 0310 is an apparatus, such as a television set, a portable telephone, a DVD recording/reproducing apparatus, a HDD recording/reproducing apparatus, a portable media reproducing apparatus, a digital still camera, a movie camera, an AV server, or a personal computer, which enables to instruct the printing apparatus to print data, and instructs the printing apparatus to print data stored in the instructing apparatus or the other apparatuses.

The storage apparatus 0320 is an apparatus, such as an AV server, a television set, a DVD recording/reproducing apparatus, a HDD recording/reproducing apparatus, or a personal computer, which has a certain storage capacity and enables to read/write data received from the other apparatuses, and serves as a spooler for the printing apparatus when necessary according to the present invention.

The printing apparatus 0330 is an apparatus, such as a laser printer, an inkjet printer, a dye sublimation printer, a facsimile (FAX), or a multifunction printer (MFP), which enables to print data, and prints data in a spool in the storage apparatus.

The printing apparatus 0330 includes: a print instruction receiving unit 0331 that receives a print instruction from the instructing apparatus 0310; a spool reservation request unit 0332 that requests the storage apparatus 0320 to reserve a spool; a spool information receiving unit 0333 that receives information of the spool reserved in the storage apparatus 0320; a spool information response unit 0334 that responds the instructing apparatus 0310 with the spool information; and a printing unit 0336 that prints data, and, if necessary, further includes: a spool monitor unit 0335 that monitors whether or not there is any print data in the spool; and a spool release request unit 0337 that requests the storage apparatus 0320 to release the spool.

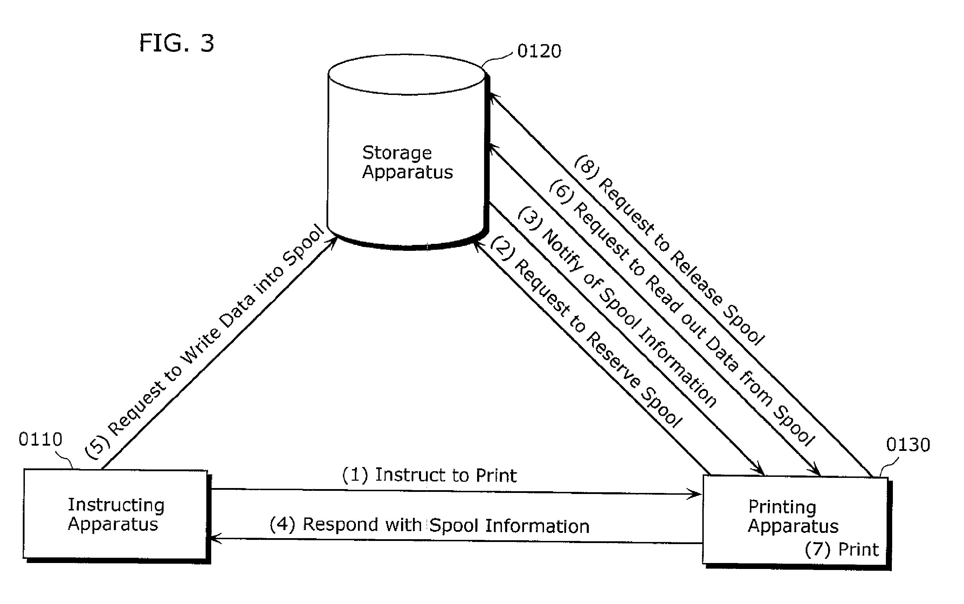

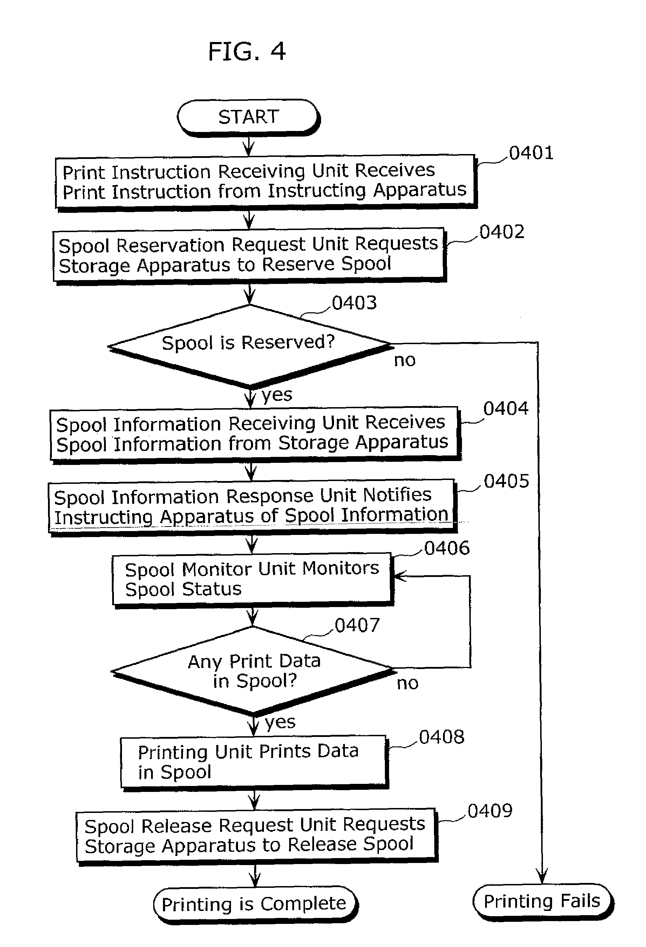

The following describes how a printing system with the above configuration prints data, with reference to communication sequence diagrams and flowcharts. FIG. 3 is a diagram showing a basic communication sequence according to a first embodiment. FIG.4 is a flowchart showing processing performed by the printing apparatus shown in FIG. 3. Note that the instructing apparatus 0310, the storage apparatus 0320, and the printing apparatus 0330 in FIG. 2 correspond to an instructing apparatus 0110, a storage apparatus 0120, and a printing apparatus 0130, respectively.

Based on instructions from a user or the like to print data, the instructing apparatus 0110 instructs the printing apparatus to print data stored in the instructing apparatus or the other apparatuses ((1) in FIG. 3). Then, the print instruction receiving unit 0331 in the printing apparatus in FIG. 2 receives the print instruction from the instructing apparatus 0310 (Step 0401 in FIG. 4). Thereby, the printing apparatus 0330 generates a print job based on the print instruction. A method of the print instruction is not limited to anything nor described herein, but when the network 0340 is an Ethernet network (R) or a wireless LAN and an Universal Plug and Play (UPnP) is adopted as an apparatus discovery/control protocol, for example, the printing apparatus receives a Create Job Soap action based on a Print Basic Service.

Note that the printing apparatus may receive print conditions, such as print run, paper size and type, print quality, and a printing method (a "N in 1" printing or a double face printing), together with the print instruction. When the printing apparatus receives the print conditions, a printing unit prints data based on the print conditions in a printing step as described further below. The printing apparatus may also receive information of data to be printed, such as a format or a data size, together with the print instruction.

Upon receipt of the print instruction, the printing apparatus 0130 starts executing the print job, and the spool reservation request unit 0332 in the printing apparatus 0130 requests the storage apparatus 0120 to reserve a spool for the print job ((2) in FIG. 3, Step 0402 in FIG. 4).

Here, the printing apparatus 0130 may receive information of print data size at Step 0401 and request the storage apparatus 0120 to reserve a spool enough for the size. Thereby, it is possible to efficiently use the storage capacity in the storage apparatus 0120. Moreover, when the printing apparatus requests the storage apparatus to reserve the spool, the printing apparatus may notify the storage apparatus of information of access right to the spool. The access right to the spool is set to enhance security in the print processing. For example, an apparatus that can request the storage apparatus to write data into the spool is restricted only to the instructing apparatus that has instructed the print job, so that other apparatuses that do not instruct the print job cannot overwrite data on the print data, and any unnecessary data cannot be written into the spool, which enables to prevent the spool from reducing a capacity in which the print data is to be written. Furthermore, an apparatus that can request the storage apparatus to read out the print data from the spool is restricted only to the printing apparatus that has requested to reserve the spool, which enables to prevent the print data from being leaked out into other apparatuses.

Note that the printing apparatus 0130 may have a function of checking whether or not the printing apparatus 0130 has a storage capacity enough to execute the print job, and if there is enough storage capacity, reserving a spool in the printing apparatus without requesting the storage apparatus 0120 to reserve the spool. More specifically, the processing skips Steps (2) and (3) in FIG. 3 and moves to Step 4 in FIG. 3 to notify the instructing apparatus of information of the spool reserved in the printing apparatus. Then, after performing (5) in FIG 3 (an arrow from the instructing apparatus 0110 to the printing apparatus 0130), the processing moves directly to (7) in FIG. 3 to print the print data. The above processing is effective especially if the printing apparatus receives the information of print data size, enabling to print the print data without the storage apparatus.

If the spool is reserved by Step 0402, the processing moves to Step 0404. If the storage apparatus is not found or does not have an enough storage capacity thereby failing to reserve the spool, the print processing fails so that the printing apparatus notifies, if necessary, the instructing apparatus that the print processing fails (Step 0403 in FIG. 4). Alternatively, the processing may, after a certain time period, move back to Step 0402 to further attempt to reserve a spool.

Upon receipt of the spool reservation request, the storage apparatus 0120 reserves a spool in a storage area of the storage apparatus 0120, and notifies the printing apparatus 0130 of information of the spool ((3) in FIG. 3). The spool information receiving unit 0333 receives the spool information from the storage apparatus (Step 0404 in FIG. 4). The spool information is, for example, information of spool location, information of spool size, or the like, or may be the information of access right to the spool if the storage apparatus determines the access right.

Note that it is also possible to reserve a plurality of spools in the storage apparatus 0120. In that case, the other apparatuses needs to specify each spool, so that in the first embodiment, the other apparatuses are assumed to specify each spool based on the information of spool location. It is also possible, for example, to generate identification for uniquely identifying each spool reserved in the storage apparatus 0120, and to notify the identification as the spool information to the printing apparatus 0130.

Next, the printing apparatus 0130 notifies the instructing apparatus 0110 of the spool information ((4) in FIG. 3). More specifically, the spool information response unit 0334 notifies the instructing apparatus of the spool information (Step 0405 in FIG. 4). For example, the information of spool location and information of spool size are notified. The instructing apparatus requests the storage apparatus to write the print data into the spool specified by the information of spool location. Furthermore, if the information of spool size is notified, the instructing apparatus can request the storage apparatus to write the print data by separating it for each spool.

The notified information may be all of the spool information which the printing apparatus 0130 receives from the storage apparatus 0120 at (3) in FIG. 3, or may be a part of them.

For example, the printing apparatus 0130 notifies the instructing apparatus of the information of spool location and the like, so that the print data is written into the spool in the storage apparatus 0120.

Next, the instructing apparatus 0110 requests the storage apparatus 0120 to write data (the print data) stored in the instructing apparatus 0110 or the other apparatuses into the spool ((5) in FIG. 3). Upon receipt of the request, the storage apparatus 0120 receives the print data and stores it into the spool.

In order to send the data, the instructing apparatus 0110 or the other apparatuses storing the print data may directly send the print data to the spool in the storage apparatus 0120, or the storage apparatus 0120 may obtain the data from the instructing apparatus 0110 by being notified from the instructing apparatus of information of print data location simultaneously in receiving a request to write the data. It is also possible that the print data is temporarily sent to the printing apparatus 0130, and the printing apparatus 0130 sends the print data to the spool in the storage apparatus 0120 when necessary. Next, the spool monitor unit 0335 monitors whether or not there is any print data in the spool (Step 0406 in FIG. 4). Here, in the first embodiment, in order to obtain the print data from the storage apparatus, the printing apparatus requests the storage apparatus to send the print data in the spool when necessary. Therefore, in the first embodiment, the printing apparatus monitors whether of not there is any print data in the spool.

Next, the printing apparatus 0130 requests the storage apparatus 0120 to send the print data in the spool to the printing apparatus ((6) in FIG. 3). Upon receipt of the request, the storage apparatus 0120 sends the print data in the spool to the printing apparatus 0130. Note that it has been described that the printing apparatus 0130 requests the storage apparatus 0120 to send the print data, but it should be appreciate that the storage apparatus 0120 may monitor whether or not there is any print data in the spool, and send the print data in the spool to the printing apparatus 0130 sequentially when the printing apparatus is ready for printing the print data.

In that case, Steps 0406 and 0407 in FIG. 4 become unnecessary, and the printing unit 0336 sequentially processes the sent data. Here, the storage apparatus may send the data to the printing apparatus after checking whether or not the printing apparatus can print the data by sending a request to receive the data, or may send the data to the printing apparatus after sending only the request to receive the data, and if the printing apparatus cannot print the data, the printing apparatus does not receive the data. It is also possible that, when the data is written in the spool, the storage apparatus notifies the printing apparatus of only a fact that the data is written, and the printing apparatus requests the storage apparatus to read out the data from the spool when the printing apparatus can print the data.

At Step 0407 in FIG. 4, if the print data is found in the spool, then the processing moves to Step 0408. That is, the printing apparatus 0130 prints the received print data ((7) in FIG. 3, Step 0408 in FIG. 4). If there is no print data, then the processing moves back to Step 0406 in FIG. 4, and the spool monitor unit 0335 monitors again whether or not there is any print data in the spool.

Next, at Step 0408, the printing unit 0336 prints the print data in the spool. When the print conditions are designated at Step 0401 as described above, the printing is performed based on the print conditions. More specifically, when the print conditions are designated by the instructing apparatus 0110 at (1) in FIG. 3, the printing unit 0336 prints the data based on the print conditions. Note that, when the printing apparatus requests the storage apparatus to send the print data when necessary as described in the first embodiment, the printing unit 0336 sequentially obtains the print data when necessary, and prints it.

When the printing is complete, the printing apparatus 0130 requests the storage apparatus 0120 to release the spool reserved at (2) in FIG. 3 ((8) in FIG. 3). More specifically, the spool release request unit 0337 requests the storage apparatus 0120 to release the spool that has been reserved for the print job (Step 0409 in FIG. 4). Upon receipt of this request, the storage apparatus 0120 releases the reserved spool.

Accordingly, the spool is reserved and released for each print job, making it possible to efficiently use the storage capacity in the storage apparatus. In addition, the storage apparatus can permit to reserve the spool only when resources of the storage capacity are enough to store the data.

By the above steps, the printing apparatus performs the print processing.

The above has described first embodiment in which the printing apparatus reserves the spool for each print job, it should be appreciate that the printing apparatus may always reserve the spool, not only when a print job is occurred. More specifically, it is also possible in the first embodiment that, when the printing apparatus is initialized, a spool for the printing apparatus is reserved in the storage apparatus, so that Steps 0402, 0403, 0404 and 0409 in FIG. 4 become unnecessary, and at Step 0405 the printing apparatus notifies the instructing apparatus of information of the spool that has been reserved during the initialization of the printing apparatus. In that case, there is an advantage to prevent from failing to reserve a spool in the storage apparatus when the printing apparatus receives the print instruction from the instructing apparatus, but there is also a disadvantage to always reserve the spool in the storage apparatus thereby wasting the storage capacity in the storage apparatus when there is no print instruction.

Furthermore, the spool reservation request unit 0332 may have a function of checking whether or the printing apparatus has a storage capacity enough to execute the print job, and if there is enough storage capacity, reserving a spool in the printing apparatus without requesting the storage apparatus to reserve a spool. This function is effective if the printing apparatus receives the information of print data size at Step 0401, enabling the printing apparatus to print the print data without the storage apparatus.

Note that the first embodiment has described that the print data is sent directly from the instructing apparatus to the spool reserved in the storage apparatus, but it should be appreciate that the printing apparatus may receive all of the data sent from the instructing apparatus, and, if necessary, store the data received from the instructing apparatus into the spool in the storage apparatus until when the printing apparatus is ready for printing the data.

Note that the first embodiment does not describe which apparatus connected via the network is to be selected as the storage apparatus 0320 according to the present invention, since a suitable apparatus for the storage apparatus 0320 can be easily searched using the UPnP and the like.

### (Second Embodiment)

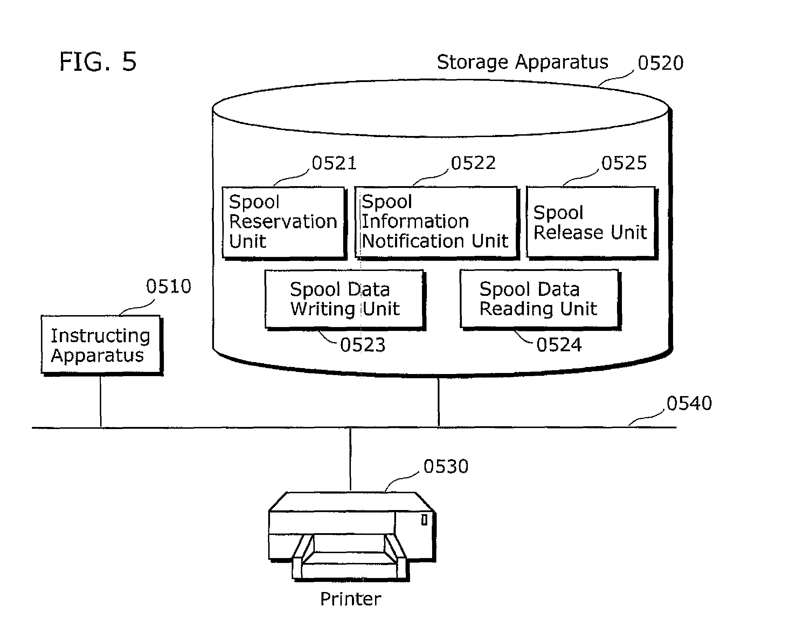

FIG. 5 is a block diagram illustrating a configuration of a storage apparatus according to a second embodiment of the present invention.

A storage apparatus 0520 is connected with an instructing apparatus 0510 and a printing apparatus 0530, via a network 0540 such as an Ethernet network (R), a wireless Local Area Network (LAN) (802.11b, for example), an IEEE1394 interface, a Bluetooth connection (R), or an Universal Serial Bus (USB).

The instructing apparatus 0510 is an apparatus, such as a television set, a portable telephone, a DVD recording/reproducing apparatus, a HDD recording/reproducing apparatus, a portable media reproducing apparatus, a digital still camera, a movie camera, an AV server, or a personal computer, which enables to instruct the printing apparatus to print data, and instructs the printing apparatus to print data stored in the instructing apparatus or the other apparatuses

The storage apparatus 0520 is an apparatus, such as an AV server, a television set, a DVD recording/reproducing apparatus, a HDD recording/reproducing apparatus, or a personal computer, which has a certain storage capacity and enables to read/write data received from the other apparatuses, and serves as a spooler for the printing apparatus when necessary according to the present invention.

The printing apparatus 0530 is an apparatus, such as a laser printer, an inkjet printer, a dye sublimation printer, a facsimile (FAX), or a multifunction printer (MFP), which enables to print data, and prints data in a spool in the storage apparatus.

The storage apparatus 0520 includes: a spool reservation unit 0521 that reserves a spool in a storage area of the storage apparatus based on a request from the printing apparatus 0530; a spool information notification unit 0522 that notifies the printing apparatus of information of the reserved spool; a spool data writing unit 0523 that writes data received from the apparatus requesting to write the data, into the spool based on the request from the instructing apparatus 0510; a spool data reading unit 0524 that reads out the data from the spool based on a request from the printing apparatus 0530, and sends the data to the apparatus requesting to read out the data; and a spool release unit 0525 that releases the spool based on a request from the printing apparatus 0530.

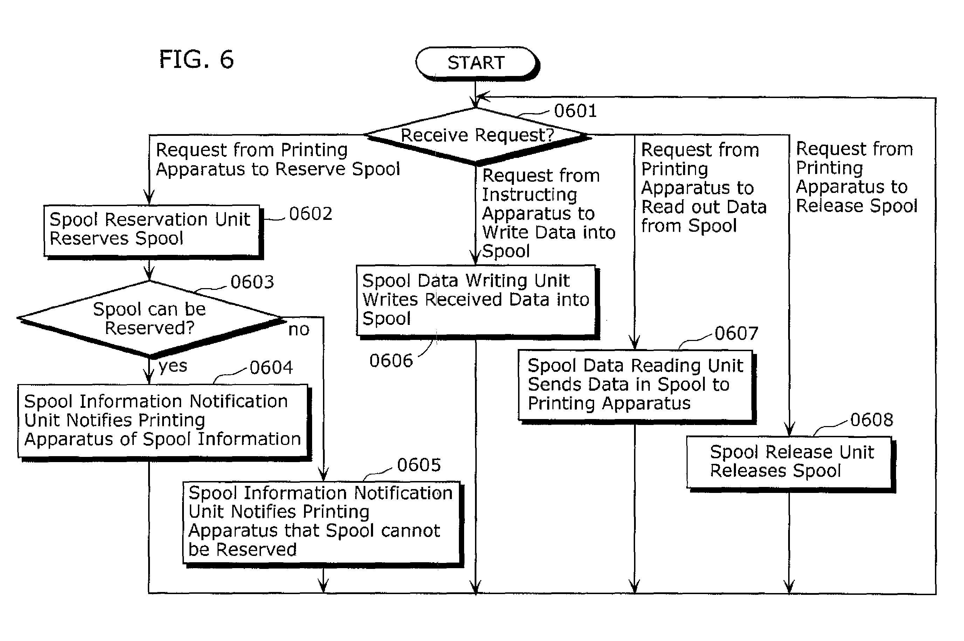

FIG. 6 is a flowchart showing processing performed by the storage apparatus 0520 according to the second embodiment. Referring to FIG. 6, processing sequence performed by the storage apparatus according to the present invention is described.

Firstly, at Step 0601, the storage apparatus 0520 waits for a request from the other apparatuses.

At Step 0601, when the storage apparatus 0520 receives a request from the printing apparatus 0530 to reserve a spool, the processing moves to Step 0602.

At Step 0602, the spool reservation unit 0521 reserves a spool in a storage area of the storage apparatus. Note that it is also possible to reserve a plurality of spools in the storage apparatus. In that case, the other apparatuses needs to specify each spool, so that in the second embodiment, the other apparatuses are assumed to specify each spool based on information of spool location. For example, when the spool information is notified at Step 0604, the spool information may further include information of location of a spool A. It is also possible, for example, to generate identification for uniquely identifying each spool reserved in the storage apparatus, and to notify the identification as the spool information to the printing apparatus.

Moreover, in receiving the request, the storage apparatus may receive information of access right to the spool, from the printing apparatus. In that case, at Steps 0606 and 0607 as described further below, each step is performed only for an apparatus having the access right. Furthermore, an apparatus that can request the storage apparatus to read out the data from the spool is restricted only to the apparatus that has requested the storage apparatus to reserve the spool, resulting from setting the access right. The apparatus that can operate the spool is restricted in order to prevent the data in the spool from being leaked out to the third party, from being tampered, and the like.

At Step 0603, if the spool can be reserved by Step 602, then the processing moves to Step 0604.

At Step 0604, the spool information notification unit 0522 notifies the printing apparatus of the information of the spool reserved at Step 0602.

At Step 0603, if the spool cannot be reserved by Step 0602, then the processing moves to Step 0605.

At Step 0605, the spool information notification unit 0522 notifies the printing apparatus that the spool cannot be reserved.

When the storage apparatus receives a request from the instructing apparatus to write data in the spool at Step 0601, the processing moves to Step 0606.

At Step 606, the spool data writing unit 0523 receives data from the instructing apparatus 0510 and writes the data into the spool.

Note that the second embodiment has described that the instructing apparatus requests directly the storage apparatus to write the data into the spool, but it should be appreciate that the printing apparatus may temporarily receive the data from the instructing apparatus, and request the storage apparatus to write the data in the spool. Furthermore, when the storage apparatus is requested to write the data, a file name may be designated to be written with the data.

At Step 0601, when the storage apparatus receives a request from the reprinting apparatus 0530 to read out the data from the spool, the processing moves to Step 0607.

At Step 0607, the spool data reading unit 0524 reads out the print data from the spool and sends the print data to the printing apparatus 0530.

Note that, when the storage apparatus is requested to read out the data, a file name may be designated to read out the data.

At Step 0601, when the storage apparatus receives a request from the printing apparatus 0530 to release the spool, the processing moves to Step 0608.

At Step 0608, the spool release unit 0525 releases the spool reserved by the spool reservation unit.

Note that, if a plurality of spools can be reserved in the storage apparatus, the request to release the spools are added with information for specifying a spool to be released, such as the information of spool location or the information of identification as described above.

The above has described the storage apparatus according to the second embodiment of the present invention.

Note that the second embodiment has described that the printing apparatus requests the storage apparatus for the data in the spool when necessary, but the method for requesting the data is not limited to the description.

For example, at Step 0606, the spool data writing unit (or a newly added sending unit) may send the data in the spool to the printing apparatus after the data has been written into the spool.

### (Third Embodiment)

The first and second embodiments have described that firstly the instructing apparatus issues the print instruction to the printing apparatus, and then the printing apparatus requests the storage apparatus to reserve the spool, but a third embodiment differs from the first and second embodiments in that the printing apparatus reserves the spool in the storage apparatus on start-up and waits for the print instruction from the instructing apparatus, and does not request the storage apparatus to release the spool until the printing apparatus is powered off.

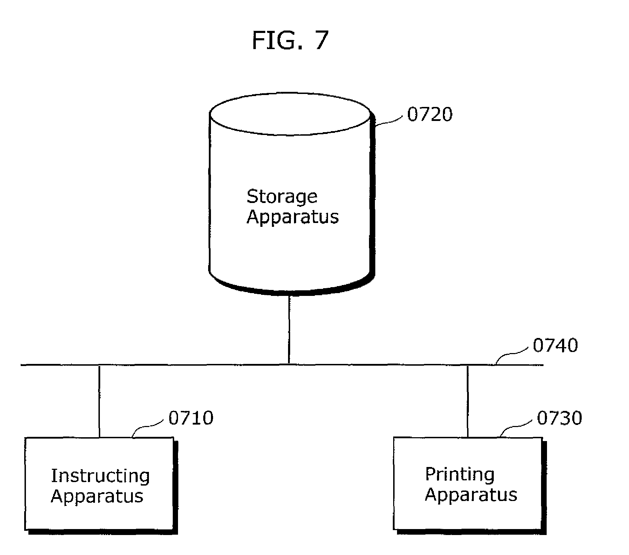

FIG. 7 is a schematic diagram illustrating a configuration of a printing system in the third embodiment.

An instructing apparatus 0710, a storage apparatus 0720, and a printing apparatus 0730 are connected via a network 0740 such as an Ethernet network (R), a wireless Local Area Network (LAN) (802.11b, for example), an IEEE1394 interface, a Bluetooth connection (R), or an Universal Serial Bus (USB).

The instructing apparatus 0710 is an apparatus, such as a television set, a portable telephone, a DVD recording/reproducing apparatus, a HDD recording/reproducing apparatus, a portable media reproducing apparatus, a digital still camera, a movie camera, an AV server, or a personal computer, which enables to instruct the printing apparatus to print data, and instructs the printing apparatus 0730 to print data stored in the instructing apparatus or the other apparatuses.

The storage apparatus 0720 is an apparatus, such as an AV server, a television set, a DVD recording/reproducing apparatus, a HDD recording/reproducing apparatus, or a personal computer, which has a certain storage capacity and enables to read/write data received from the other apparatuses, and serves as a spooler for the printing apparatus when necessary according to the present invention.

The printing apparatus 0730 is an apparatus, such as a laser printer, an inkjet printer, a dye sublimation printer, a facsimile (FAX), or a multifunction printer (MFP), which enables to print data, and prints data in a spool in the storage apparatus.

Referring again to the flowchart of FIG. 3, print processing performed by the printing system according to the present invention is described.

Based on instructions from a user or the like to print data, the instructing apparatus 0110 instructs the printing apparatus to print data stored in the instructing apparatus or the other apparatuses ((1) in FIG. 3).

Here, the instructing apparatus 0110 may send print conditions, such as print run, paper size and type, print quality, and a printing method (a "N in 1" printing or a double face printing), to the printing apparatus. When the printing apparatus receives the print conditions, the printing apparatus prints data based on the print conditions in a printing step as described further below. The printing apparatus may also receive information of data to be printed, such as a format or a data size, together with the print instruction.

Upon receipt of the print instruction, the printing apparatus 0130 starts executing the print job, and the printing apparatus 0130 requests the storage apparatus 0120 to reserve a spool for the print job ((2) in FIG. 3).

Here, the printing apparatus 0130 may receive information of print data size together with the print instruction, and request the storage apparatus 0120 to reserve a spool enough for the size. Thereby, it is possible to efficiently use the storage capacity in the storage apparatus 0120.

Moreover, when the printing apparatus requests the storage apparatus to reserve the spool, the printing apparatus 0130 may notify the storage apparatus of information of access right to the spool and request the storage apparatus to set the access right. The access right to the spool is set to enhance security in the print processing. For example, an apparatus that can request the storage apparatus to write data into the spool is restricted only to the instructing apparatus that has instructed the print job, so that other apparatuses that do not instruct the print job cannot overwrite data on the print data, and any unnecessary data cannot be written into the spool, which enables to prevent the spool from reducing a capacity in which the print data is to be written. Furthermore, an apparatus that can request the storage apparatus to read out the print data from the spool is restricted only to the printing apparatus that has requested to reserve the spool, which enables to prevent the print data from being leaked out into other apparatuses.

Note that the printing apparatus 0130 may have a function of checking whether or not the printing apparatus 0130 has a storage capacity enough to execute the print job, and if there is enough storage capacity, reserving a spool in the printing apparatus without requesting the storage apparatus 0120 to reserve the spool. More specifically, the processing skips Steps (2) and (3) in FIG. 3 and moves to Step 4 in FIG. 3 to notify the instructing apparatus of information of the spool reserved in the printing apparatus. Then, after performing (5) in FIG 3, the processing moves directly to (7) in FIG. 3 to print the print data. The above processing is effective especially if the printing apparatus receives the information of print data size, enabling to print the print data without the storage apparatus.

Upon receipt the request to reserve a spool, the storage apparatus 0120 reserves a spool in a storage area of the storage apparatus 0120, and notifies the printing apparatus 0130 of information of the spool ((3) in FIG. 3). The spool information is, for example, information of spool location, information of spool size, or the like. If the storage apparatus 0120 determines the access right to the spool, the information may include the information of access right.

Note that it is also possible to reserve a plurality of spools in the storage apparatus 0120. In that case, the other apparatuses needs to specify each spool, so that in the third embodiment, the other apparatuses are assumed to specify each spool based on the information of spool location. It is also possible, for example, to generate identification for uniquely identifying each spool reserved in the storage apparatus 0120, and notify the identification as the spool information to the printing apparatus 0130.

Next, the printing apparatus 0130 notifies the instructing apparatus 0110 of the spool information ((4) in FIG. 3).

The notified information may be all of the spool information which the printing apparatus 0130 receives from the storage apparatus 0120 at (3) in FIG. 3, or may be a part of them.

For example, the printing apparatus 0130 notifies the instructing apparatus of the information of spool location and the like, so that the print data is written into the spool in the storage apparatus 0120.

Next, the instructing apparatus 0110 requests the storage apparatus 0120 to write data (the print data) stored in the instructing apparatus 0110 or the other apparatuses into the spool ((5) in FIG. 3). Upon receipt of the request, the storage apparatus 0120 receives the print data and stores it into the spool.

In order to send the data, the instructing apparatus 0110 or the other apparatuses storing the print data may directly send the print data to the spool in the storage apparatus 0120, or the storage apparatus 0120 may obtain the data from the instructing apparatus 0110 by being notified from the instructing apparatus of information of print data location simultaneously in receiving the request to write the data. It is also possible that the print data is temporarily sent to the printing apparatus 0130, and the printing apparatus 0130 sends the print data to the spool in the storage apparatus 0120 when necessary.

Next, the printing apparatus 0130 requests the storage apparatus 0120 to send the print data in the spool to the printing apparatus ((6) in FIG. 3). Upon receipt of the request, the storage apparatus 0120 sends the print data in the spool to the printing apparatus 0130. Note that it has been described that the printing apparatus 0130 requests the storage apparatus 0120 to send the print data, but it should be appreciate that the storage apparatus 0120 may monitor whether or not there is any print data in the spool, and send the print data in the spool to the printing apparatus 0130 sequentially when the printing apparatus is ready for printing the print data.

Next, the printing apparatus 0130 prints the received print data ((7) in FIG. 3). When the print conditions are designated by the instructing apparatus at (1) in FIG. 3 as described above, the printing is performed based on the print conditions.

When the printing is complete, the printing apparatus 0130 requests the storage apparatus 0120 to release the spool reserved at (2) in FIG. 3 ((8) in FIG. 3). Upon receipt of the request, the storage apparatus 0120 releases the reserved spool.

The above has been described the printing system according to the third embodiment of the present invention, in which the spool is reserved for each print job.

However, the method for reserving the spool is not limited only to the above, but it should be appreciate that the spool may be reserved for a constant use when the printing apparatus is initialized, not only when a print job is occurred. In that case, there is an advantage to prevent from failing to reserve a spool in the storage apparatus when the printing apparatus receives the print instruction from the instructing apparatus, but there is also a disadvantage to always reserve the spool in the storage apparatus thereby wasting the storage capacity in the storage apparatus when there is no print instruction.

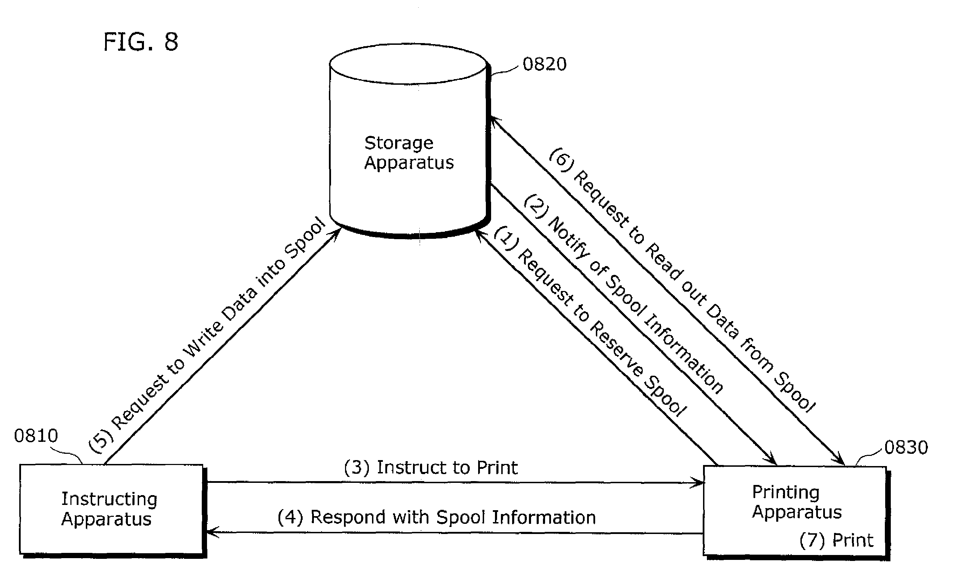

Referring to FIG. 8, print processing in which the spool is always reserved is described.

A configuration of the system is the same as described with reference to FIG. 7 so that the configuration is not described.

Firstly, the printing apparatus 0830 requests the storage apparatus 0820 to reserve a spool when the printing apparatus is initialized ((1) in FIG. 8).

Upon receipt of the request, the storage apparatus 0820 reserves a spool and notifies the printing apparatus 0830 of information of the reserved spool ((2) in FIG. 8). The spool information has been described in more detail above.

The processing performed when the printing apparatus 0830 is initialized has been described above, and after that, the printing apparatus 0830 waits for a print instruction from the instructing apparatus.

When the printing apparatus 0830 receives a print instruction from the instructing apparatus ((3) in FIG. 8), the printing apparatus 0830 notifies the instructing apparatus of information of the spool reserved at (1) in FIG. 8 ((4) in FIG. 8).

Next, based on the spool information received at (4) in FIG. 8, the instructing apparatus 0810 requests the storage apparatus 0820 to write data into the spool ((5) in FIG. 8).

Then, the printing apparatus 0830 receives the data in the spool from the storage apparatus 0820 ((6) in FIG. 8) and prints the received data ((7) in FIG. 8).

When the printing is complete, the printing apparatus 0830, if necessary, notifies the instructing apparatus 0810 that the printing is complete, and waits for another print instruction from the instructing apparatus 0810.

The above has been described the printing apparatus, the storage apparatus, the printing system according to the present invention, but the present invention is not limited not to be the field of the printing technology. The present invention can also be implemented as an apparatus and a system for performing certain processing, in which the apparatus temporarily needs a storage area that is larger than its storage capacity.

For example, the present invention can be implemented as a DVD/HDD video recording apparatus, in which, when the apparatus is requested to record data whose size is larger than the storage area of the apparatus, the apparatus temporarily uses a storage capacity in another apparatus with a sufficient storage capacity, and continues to record the data onto the another apparatus. More specifically, the recording apparatus records a program, based on instructions from the other apparatuses or a user, or based on a timer set in the recording apparatus, and then, if a storage area in the recording apparatus is run out although the program has not yet been finished, the recording apparatus dynamically requests an external apparatus with a sufficient storage capacity, such as an AV server, to reserve a buffer in the external apparatus in order to write a part of the data to be recorded for which the recording apparatus has no more enough storage capacity, into the buffer in the external apparatus, thereby preventing from loosing the data in the recording. If the available storage capacity in the recording data increases after unnecessary recorded data is deleted, the recording apparatus reads out the part of the recorded data which is stored in the buffer of the external apparatus, and releases the buffer reserved in the external apparatus.

The present invention can be further implemented as systems for reproducing and processing data such as video and music.

### (Fourth Embodiment)

The first to third embodiments have described that the instructing apparatus requests the storage apparatus to write data in the spool reserved in the storage apparatus, but a fourth embodiment differs from the first to third embodiments in that the printing apparatus requests to write data into the spool. More specifically, the printing apparatus temporarily obtains homepage data represented in HTML language and the like from the instructing apparatus, and after analyzing the data, the printing apparatus prints the data simultaneously storing a part of data which the printing apparatus cannot print at a time into the spool until the printing apparatus can print the part of the data. Note that, in the fourth embodiment, the spool monitor unit 0335 becomes unnecessary in the printing apparatus 0330 illustrated in FIG. 2, however, the printing apparatus 0330 needs to further include a homepage analysis unit that analyzes a homepage such as HTML, a spool writing unit, and spool reading unit (not illustrated).

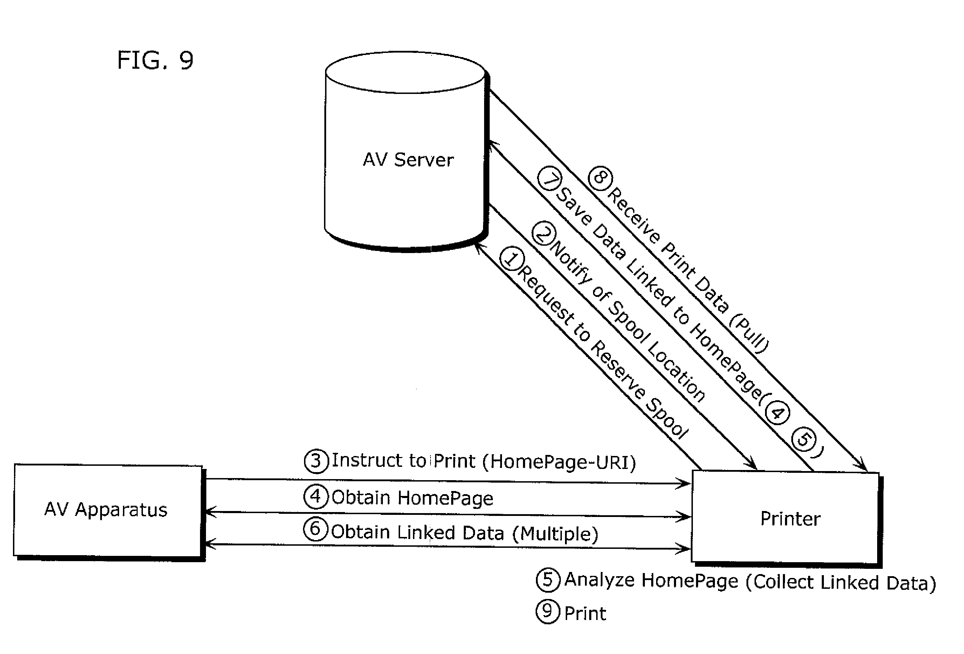

FIG.9 is a diagram showing one example of a communication sequence when an AV apparatus and an AV server transfer all data via a printer, and the printer always reserves a spool in the AV server. More specifically, in the example, the printer reserves the spool in the AV server when the printer is powered on, and releases the spool when the printer is powered off.

Firstly, the printer is powered on. The spool reservation request unit 0332 illustrated in FIG. 2 firstly requests the AV server with a sufficient storage capacity to reserve a spool ((1) in FIG. 9). Upon receipt of the request, the AV server reserves a spool and notifies the printer of information for representing a location of the spool and the like ((2) in FIG. 9). Then, the spool information receiving unit 0333 illustrated in FIG. 2 receives the spool information. Next, when the spool has already been reserved, the print instruction receiving unit 0331 receives a print instruction from the AV apparatus ((3) in FIG. 9). Here, the print instruction is assumed to include, for example, an Uniform Resource Identifier (URI) representing a homepage on the Internet, and the like. Based on the URI included in the received print instruction, the print instruction receiving unit 0331 downloads a homepage from the AV apparatus ((4) in FIG. 9). Note that the homepage to be printed may be obtained from the Internet, not only from the AV apparatus. It is also possible that the print instruction receiving unit 0331 receives the homepage after receiving the print instruction.

After obtaining the homepage, the homepage analysis unit in the printer analyzes the homepage obtained via the AV apparatus or the Internet, and collects data linked to the homepage ((5) in FIG. 9). Subsequently, the homepage analysis unit obtains a text in the homepage as well as images linked to the homepage ((6) in FIG. 9). Here, when the printer has a built-in buffer, the homepage analysis unit checks, based on an available capacity in the buffer, whether or not the obtained data needs a larger storage capacity than the buffer has, and if the obtained data needs a larger storage capacity than the built-in buffer has, the spool writing unit stores a part of the data for which the built-in buffer does not have an enough capacity, into the spool in the AV server until the built-in buffer can store the part of the data ((7) in FIG. 9). The printing unit prints the readout data ((9) in FIG. 9). In practice, the capacity in the buffer built in the printer is not large enough to store the data, so that the processing repeats Steps (5), (6), (7), and (8) within a relatively short time period, in which, after the homepage analysis unit completes the analysis, the spool writing unit immediately stores the data into the spool, then the spool reading unit reads out the data form the spool, and the printing unit prints the data. When the printing is complete as described above and the printer is powered off, the printer requests the AV server to release the reserved spool. As described above, the printer stores data for which the buffer built in the printer does not have an enough storage capacity, into the spool until the printer can print the data, so that the printer does not necessarily have a large storage capacity.

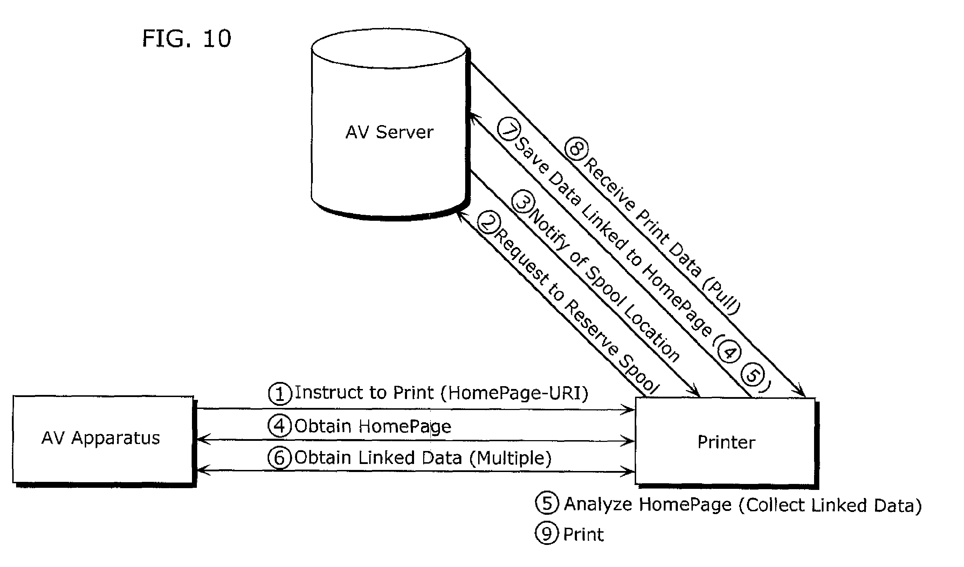

Note that, in FIG. 9, the printer has described to always reserve the spool in the AV server, but it should be appreciate that the printer may reserve the spool when the printer receives the print instruction from the AV apparatus being the instructing apparatus, as described in the first embodiment. FIG.10 is a diagram showing one example of a communication sequence when the printer requests the AV server to reserve the spool after receiving the print instruction from the AV apparatus, and all steps are performed via the printer.

FIG. 10 differs from FIG. 9 in the processing order of (1) instructing to print, (2) requesting to reserve a spool, and (3) notifying information of spool location. Here, firstly, the AV server issues a print instruction including an URI of a homepage to the printer ((1) in FIG. 10), and then the printer generates a print job and sends a spool reservation request to the AV server ((2) in FIG. 10). After reserving a spool based on the request, the AV server notifies the printer of a location, a size, and the like of the reserved spool. The subsequent processing is same as shown in FIG. 9, but in FIG. 10, the spool is reserved for each print job so that it is possible to reserve respective spools available for a plurality of print instructions. Thus, according to the present invention, the spools are reserved for respective print instructions, making it possible to receive the plurality of print instructions at a same time.

### Industrial Applicability

The printing apparatus according to the present invention has a function of reserving a spool in another apparatus and is suited for use as a printing apparatus without a sufficient storage capacity, such as a laser printer, an inkjet printer, a dye sublimation printer, a facsimile (FAX), or a multifunction printer (MFP). Furthermore, the printing apparatus is not limited only to the field of the printing technology, but also implemented as an apparatus for performing certain processing whose storage capacity is not sufficient to store data. For example the present invention can be implemented as apparatuses for reproducing and processing data such as video and music.

The storage apparatus according to the present invention is suited for use as an apparatus, such as an AV server, a television set, a DVD recording/reproducing apparatus, a HDD recording/reproducing apparatus, or a personal computer, having a certain storage capacity, which has a function of dynamically lending its storage capacity to other apparatuses, and enables to read/write data received from the other apparatuses.

The printing system according to the present invention is suited for use as a printing system connected via a network, having a characteristic in which apparatuses therein perform certain processing sharing their storage resources and one apparatus lends its storage area to another apparatus. The printing system can be implemented not only in the field of the printing technology, but also as a system in which storage resources are shared among apparatuses connected via a network thereby increasing efficiency in the system. For example, the present invention can be implemented as systems for reproducing and processing data such as video and music.

## Claims

1. A printing apparatus that is connected via a communication path with a print instructing apparatus which issues a print instruction to print print data and an external storage apparatus which has a storage space for temporarily storing the print data, said printing apparatus comprising:
a spool reservation request unit operable to issue, to the external storage apparatus, a request for reservation of a spool for temporarily storing the print data;
a spool reservation response receiving unit operable to receive, from the external storage apparatus, a response to the request issued by said spool reservation request unit;
a print instruction receiving unit operable to receive the print instruction issued by the print instructing apparatus;
a print data receiving unit operable to receive the print data sent from the spool, after the print instruction is received and the print data is stored in the spool in the external storage apparatus; and
a printing unit operable to print the received print data.

2. The printing apparatus according to Claim 1,
wherein said spool reservation request unit is operable to issue, to the external storage apparatus, the request for reservation of the spool, after said print instruction receiving unit receives the print instruction.

3. The printing apparatus according to Claim 2, further comprising
a spool release request unit operable to issue, to the external storage apparatus, a request for release of the spool every time said printing unit has finished printing, the request requesting to release the spool.

4. The printing apparatus according to Claim 1,
wherein said spool reservation request unit is operable to issue the request to the external storage apparatus when said printing apparatus is powered on.

5. The printing apparatus according to Claim 4, further comprising
a spool release request unit operable to issue, to the external storage apparatus, a request for release of the spool when said printing apparatus is powered off.

6. The printing apparatus according to Claim 1,
wherein said spool reservation response receiving unit is operable to receive spool information including information for specifying a location of the spool as the response, from the external storage apparatus,
said printing apparatus further comprises a spool location notification unit operable to notify the location of the spool specified by the spool information, to the print instructing apparatus, and
the print instructing apparatus is operable to output the print data to the spool notified by the spool information.

7. The printing apparatus according to Claim 1, further comprising
a print data save unit operable to receive the print data outputted from the print instructing apparatus, and to request the external storage apparatus to temporarily store the print data into the spool.

8. The printing apparatus according to Claim 1,
wherein said print data receiving unit is operable to obtain the print data by issuing a request to the external storage apparatus, the request requesting to output the print data from the spool.

9. The printing apparatus according to Claim 8, further comprising
a spool monitor unit operable to monitor whether or not the print data is stored in the spool in the external storage apparatus,
wherein said print data receiving unit is operable to issue, to the external storage apparatus, the request to output the print data from the spool, when said spool monitor unit determines that the print data is stored in the spool in the external storage apparatus.

10. A printing method for use with a printing apparatus that is connected via a communication path with a print instructing apparatus which issues a print instruction to print print data and an external storage apparatus which has a storage space for temporarily storing the print data, said method comprising the steps of;
issuing a request for reservation of a spool for temporarily storing the print data, to the external storage apparatus;
receiving a response to the request issued in said issuing, from the external storage apparatus;
receiving the print instruction issued by the print instructing apparatus;
receiving the print data sent from the spool, after the print instruction is received and the print data is stored in the spool in the external storage apparatus; and
printing the received print data.

11. A program for use with a printing apparatus that is connected via a communication path with a print instructing apparatus which issues a print instruction to print print data and an external storage apparatus which has a storage space for temporarily storing the print data, said program causing a computer to execute steps comprised in said printing method according to Claim 10.

12. A printing method for use in a printing system including a print instructing apparatus, an external storage apparatus, and a printing apparatus which are connected via a communication path, said method comprising:
issuing the print instruction to print print data, from the print instructing apparatus to the printing apparatus;
issuing a request for reservation of a spool for temporarily storing the print data, from the printing apparatus to the external storage apparatus;
notifying a location of the spool, from the external storage apparatus to the printing apparatus;
notifying the location of the spool notified by the external storage apparatus, from the printing apparatus to the print instructing apparatus;
sending the print data based on the notified location of the spool, from the print instructing apparatus to the spool,; and
sending the print data, from the spool to the printing apparatus; and
printing the sent print data by the printing apparatus.

13. The printing method according to Claim 12,
wherein in said issuing of the request to reserve the spool, the request is issued to reserve the spool prior to said issuing of the print instruction.

14. The printing method according to Claim 12, further comprising
releasing the spool by the external storage apparatus, when said printing is complete.

15. The printing method according to Claim 12,
wherein in said sending of the print data, the print data is sent from the print instructing apparatus to the spool via the printing apparatus.
